# EUROPEAN PATENT APPLICATION

(11) **EP 2 337 430 A1**
(43) Date of publication of application: **22.06.2011**
(21) Application number: 09819030.9
(22) Date of filing: 15.06.2009
(51) Int. Cl.: H05B 37/02

(54) **ILLUMINATING APPARATUS AND LIQUID CRYSTAL DISPLAY APPARATUS PROVIDED WITH THE SAME**

(30) Priority: 10.10.2008 JP 2008263427
(71) Applicant: Sharp Kabushiki Kaisha, Osaka-shi, Osaka 545-8522 (JP)
(72) Inventor: NABESAWA, Hiroyuki, OSAKA 545-8522 (JP); TOMIYOSHI, Akira, OSAKA 545-8522 (JP)
(74) Representative: Müller-Boré & Partner Patentanwälte
(86) International application number: PCT/JP2009/060842
(87) International publication number: WO 2010/041493

(57) **Abstract**

An illumination device is provided that can reduce decreases in brightness of illumination light. The illumination device (10) includes a main controller (11) that identifies, when a color shade correction operation is performed, an LED that is degraded most significantly among a red LED (3a), a green LED (3b) and a blue LED (3c) in each of a plurality of light emitting elements (3), and classifies, based on a degradation rate of the LED that is degraded most significantly, the light emitting elements (3) into a first group in which color shade correction is performed and a second group in which the color shade correction is not performed.

## Description

### Technical Field

The present invention relates to an illumination device and a liquid crystal display device including the illumination device.

### Background Art

Conventionally, there is known an illumination device that uses, as a light source, a red light emitting diode (red LED) which emits red light, a green light emitting diode (green LED) which emits green light and a blue light emitting diode (blue LED) which emits blue light; the illumination device is utilized as a backlight unit that illuminates the liquid crystal display panel of a liquid crystal display device. In this type of conventional illumination device, three types of LED light (red light, green light and blue light) are mixed to produce white light, and the white light is used as the illumination light (see, for example, patent document 1).

Incidentally, in the conventional illumination device described above, in order to satisfactorily produce color shade of white light that is the illumination light, it is necessary to appropriately set the brightness ratio of the three types of LED light. Hence, conventionally, currents supplied to the red LED, the green LED and the blue LED are set such that an appropriate bright ness ratio of the three types of LED light is acquired.

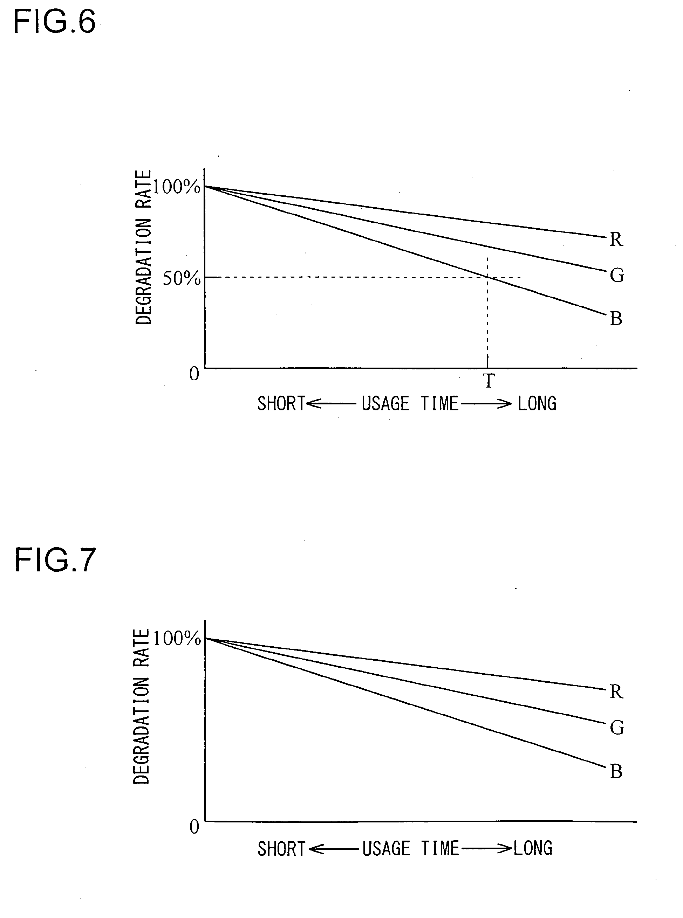

However, as shown in Fig. 7, the degradation rates of the red LED, the green LED and the blue LED differ from each other, and the difference between the degradation rates gradually increases as they are used longer. In other words, any one of the red LED, the green LED and the blue LED may be degraded more significantly than the other LEDs. The degradation rates shown in Fig. 7 are assumed to be 100% at the time of initial use. "R", "G" and "B" shown in Fig. 7 represent the degradation rates of the red LED, the green LED and the blue LED, respectively.

When the difference between the degradation rates is increased, if currents are supplied to the LEDs under the same conditions as the initial use, the brightness ratio of the three types of LED light significantly differs from the appropriate initial value. This disadvantageously results in unsatisfactory color shade of the illumination light. In order to overcome the disadvantage, the conventional illumination device is configured such that it can perform an operation of correcting the color shade of the illumination light.

In the conventional illumination device, when the color shade correction operation is performed, the brightness of light emitted from the red LED, the green LED and the blue LED is measured, and thus the degradation rate of each LED is acquired. Then, a current supplied to a predetermined LED that is degraded most significantly among the red LED, the green LED and the blue LED is fixed, and currents supplied to the other LEDs are adjusted to initial usage values or less, with the result that the brightness ratio of the three types of LED light is returned to the initial state. In this way, the color shade of the illumination light obtained by mixing the three types of LED light is corrected such that it is returned to the initial state.

### Related Art Document

### Patent Document

Patent document 1: JP-A-2004-93761

### Disclosure of the Invention

### Problems to be Solved by the Invention

However, in the conventional illumination device described above, as the predetermined LED is degraded more significantly, the currents supplied to the other LEDs are more reduced, with the result that the brightness of the illumination light is reduced. In other words, a problem is encountered in that, each time the color shade correction operation is performed, the brightness of the illumination light is gradually reduced.

The present invention is designed to overcome the foregoing problem, and an object of the present invention is to provide an illumination device that can reduce decreases in brightness of illumination light and a liquid crystal display device including the illumination device.

### Means for Solving the Problem

To achieve the above object, according to a first aspect of the present invention, there is provided an illumination device that mixes red light, green light and blue light to generate illumination light, that uses the illumination light to illuminate a member to be illuminated, that includes: a plurality of light emitting elements, each including a red light emitting diode that emits red light, a green light emitting diode that emits green light and a blue light emitting diode that emits blue light; and a control portion that performs a color shade correction operation of correcting a color shade of the illumination light by determining degradation rates of the red light emitting diode, the green light emitting diode and the blue light emitting diode and adjusting, based on the degradation rates, currents supplied to the red light emitting diode, the green light emitting diode and the blue light emitting diode. In the illumination device, the control portion identifies, when the color shade correction operation is performed, a light emitting diode that is degraded most significantly among the red light emitting diode, the green light emitting diode and the blue light emitting diode in each of the plurality of light emitting elements, and classifies, based on a degradation rate of the light emitting diode that is degraded most significantly, the plurality of light emitting elements into a first group in which color shade correction is performed and a second group in which the color shade correction is not performed.

In the illumination device of the first aspect, as described above, the control portion is configured such that, when the color shade correction operation is performed, the light emitting diode that is degraded most significantly among the red light emitting diode, the green light emitting diode and the blue light emitting diode in each of the light emitting elements is identified, and that, based on the degradation rate of the light emitting diode that is degraded most significantly, the light emitting elements are classified into the first group in which the color shade is corrected and the second group in which the color shade is not corrected. Hence, when the current supplied to the light emitting diode that is degraded most significantly is fixed, the currents supplied to the other light emitting diodes are adjusted to the initial usage values or less and thus the color shade correction is performed on the light emitting element, it is possible to perform control such that, if color shade correction performed on a light emitting element causes the brightness of emitted light to be reduced excessively, the color shade correction is not performed on such a light emitting element. In other words, it is possible to prevent the brightness of light emitted by any one of the light emitting elements from being reduced excessively as a result of the color shade correction operation being operated. Consequently, even when the color shade correction operation is performed, it is possible to minimize decreases in brightness of the illumination light.

Preferably, in the illumination device of the first aspect, when the color shade correction operation is performed, whether or not the degradation rate of the light emitting diode that is degraded most significantly reaches a predetermined value is determined, and the color shade correction is not performed on any of the light emitting elements in which the degradation rate of the light emitting diode that is degraded most significantly reaches the predetermined value, and the color shade correction is performed on any other of the light emitting elements in which the degradation rate of the light emitting diode that is degraded most significantly does not reach the predetermined value. With this configuration, it is possible to easily perform control such that the color shade correction is not performed on any of the light emitting elements in which, if the color shade correction is performed, the brightness of emitted light is expected to be excessively reduced, and that the color shade correction is performed on any other of the light emitting elements.

Preferably, in the illumination device of the first aspect, a light receiving element that receives light emitted from each of the red light emitting diode, the green light emitting diode and the blue light emitting diode and that outputs a value corresponding to a brightness of the received light is further included, and, when the color shade correction operation is performed, the degradation rates of the red light emitting diode, the green light emitting diode and the blue light emitting diode are determined based on the output value of the light receiving element. With this configuration, it is possible to easily determine the degradation rates of the red light emitting diode, the green light emitting diode and the blue light emitting diode.

Preferably, in the illumination device of the first aspect, when the color shade correction operation is performed, light is sequentially emitted by the red light emitting diode, the green light emitting diode and the blue light emitting diode on a one-by-one basis such that the degradation rates of the red light emitting diode, the green light emitting diode and the blue light emitting diode are determined. With this configuration, it is possible to accurately determine the degradation rates of the red light emitting diode, the green light emitting diode and the blue light emitting diode.

Preferably, in the illumination device of the first aspect, when the color shade correction operation is performed, correction is performed on any of the light emitting elements classified into the first group such that a current supplied to the light emitting diode which is degraded most significantly is fixed and that currents supplied to the other light emitting elements are adjusted to initial usage values or less.

A liquid crystal display device of a second aspect of the present invention includes the illumination device of the first aspect and a liquid crystal display panel illuminated by the illumination device. With this configuration, it is possible to reduce decreases in brightness of illumination light that illuminates the liquid crystal display panel.

### Advantages of the Invention

As described above, with the present invention, it is possible to easily obtain an illumination device that can reduce decreases in brightness of illumination light and a liquid crystal display device including the illumination device.

### Brief Description of Drawings

[Fig. 1] An exploded perspective view of an illumination device according to an embodiment of the present invention;
[Fig. 2] An enlarged plan view of a light emitting portion of the illumination device according to the embodiment shown in Fig. 1;
[Fig. 3] A cross-sectional view taken along line 100-100 of Fig. 2;
[Fig. 4] A block diagram of a control system of the illumination device according to the embodiment shown in Fig. 1;
[Fig. 5] A flowchart illustrating an operation of correcting color shade operated by the illumination device according to the embodiment of the present invention;
[Fig. 6] A graph illustrating the operation of correcting color shade performed by the illumination device according to the embodiment of the present invention; and [Fig. 7] A graph illustrating the degradation rates of LEDs.

### Best Mode for Carrying Out the Invention

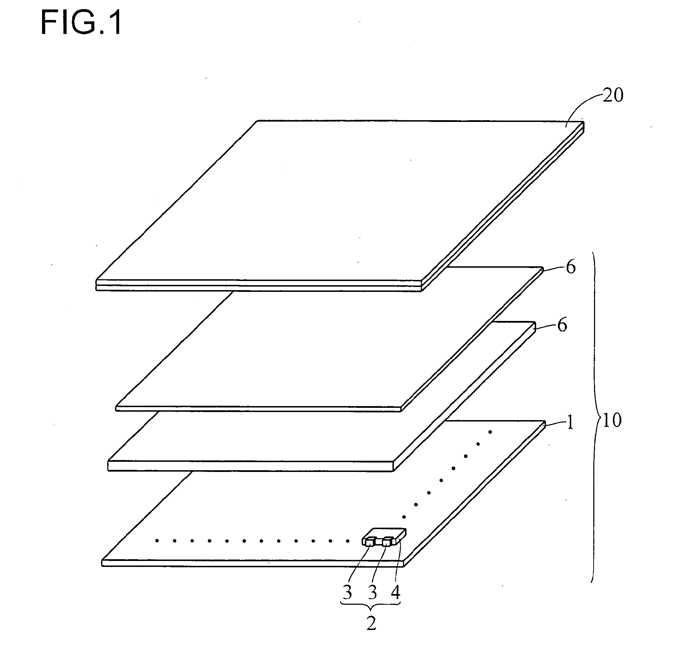

The overall configuration of an illumination device 10 of the present embodiment will be described below with reference to Figs. 1 to 4.

As shown in Fig. 1, the illumination device 10 of the present embodiment is used as a backlight unit that illuminates a liquid crystal display panel (member to be illuminated) 20 of a liquid crystal display device; the illumination device 10 is configured to emit planar white light as illumination light. When the illumination device 10 of the present embodiment is used as a backlight, the illumination device 10 is arranged on the back surface side of the liquid crystal display panel 20 opposite the display surface side thereof.

The illumination device 10 of the present embodiment employs a tandem method, and has a plurality of light emitting portions (composed of light emitting elements 3 and light guide plates 4) 2 that are arranged in a matrix on a substrate 1. Each of the light emitting portions 2 generates white light as illumination light, and emits the generated white light to the liquid crystal display panel 20.

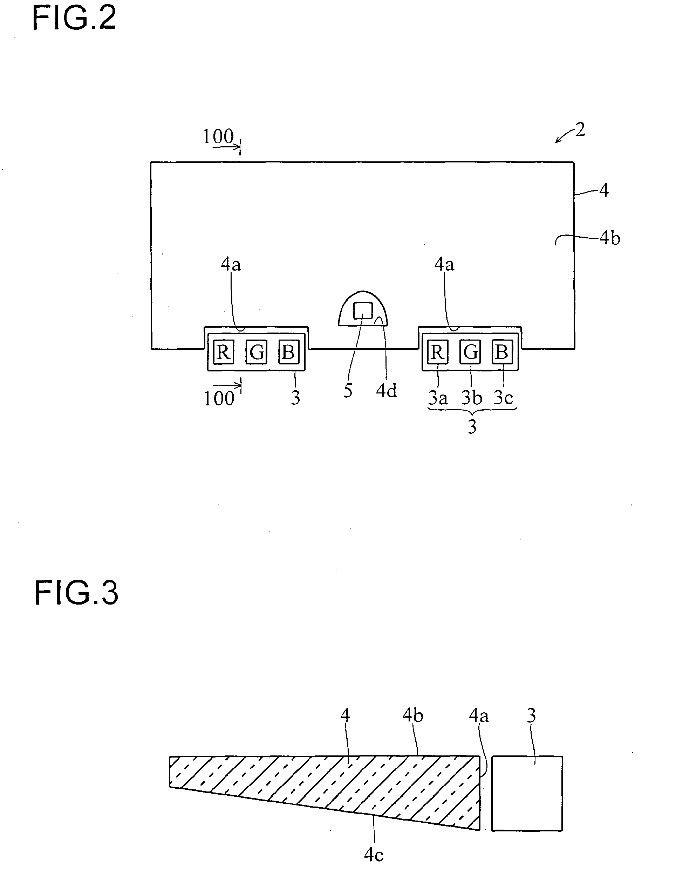

As shown in Fig. 2, each of the light emitting portions 2 is composed of the light emitting elements 3 and the light guide plate 4. Two light emitting elements 3, which are components of the light emitting portion 2, are provided in each of the light emitting portions 2. The light emitting element 3 includes a red LED (red light emitting diode) 3a that emits red light, a green LED (green light emitting diode) 3b that emits green light and a blue LED (blue light emitting diode) 3c that emits blue light; the light emitting element 3 has a structure in which they are fitted to a package. The white light is obtained by mixing the three types of LED light (red light, green light and blue light) emitted from the red LED 3a, the green LED 3b and the blue LED 3c. Specifically, currents supplied to the red LED 3a, the green LED 3b and the blue LED 3c are individually adjusted, and thus the brightness ratio of the three types of LED light is adjusted to an appropriate value, with the result that satisfactory white light is obtained when the three types of LED light are mixed. The red LED 3a, the green LED 3b and the blue LED 3c can independently emit light when an operation of correcting color shade, which will be described later, is performed.

As shown in Figs. 2 and 3, the light guide plate 4, which is an component of the light emitting portion 2, is used to guide light emitted from the light emitting elements 3 to the liquid crystal display panel 20; one light guide plate 4 is provided in each of the light emitting portions 2. In other words, light emitted from two light emitting elements 3 is guided by one light guide plate 4.

The light guide plate 4 has at least a light receiving surface 4a that is arranged to face the light emission surface of the light emitting element 3, a light emitting surface 4b that is formed with a surface (surface facing the liquid crystal display panel 20) perpendicular to the light receiving surface 4a and a back surface 4c that is a surface opposite the light emitting surface 4b. The light guide plate 4 is formed such that, as the light guide plate 4 extends from the light receiving surface 4a, the thickness of the plate is gradually reduced, that the back surface 4c is inclined and that the light guide plate 4 is wedge-shaped. In a predetermined portion of the light guide plate 4, a through hole 4d is formed that penetrates the light guide plate 4 in the thickness direction of the plate.

As shown in Fig. 2, in each of the light emitting portions 2, there is provided a photodiode (light receiving element) 5 that is inserted into the through hole 4d of the light guide plate 4. The photodiode 5 receives the three types of LED light guided in the light guide plate 4, and outputs a value corresponding to the brightness of the received LED light. The output value of the photodiode 5 is used when the operation of correcting color shade, which will be described later, is performed.

As shown in Fig. 1, optical sheets 6 that light from the light emitting portions 2 enters are provided above the light emitting portions 2 (on the side of the liquid crystal display panel 20). The light from the light emitting portions 2 is diffused and collected by the optical sheets 6.

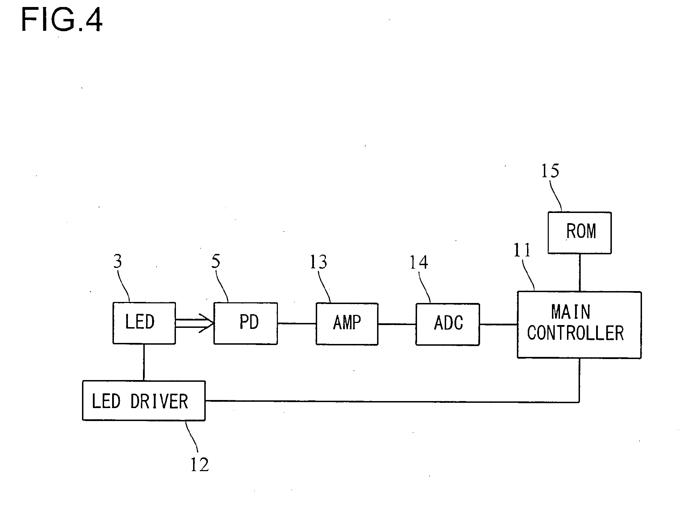

Incidentally, the red LED 3a, the green LED 3b and the blue LED 3c, which generate white light as the illumination light, are gradually degraded as they are used longer, and their degradation rates differ from each other. When any one of the red LED 3a, the green LED 3b and the blue LED 3c is degraded more significantly than the other LEDs, the brightness ratio of the three types of LED light differs from an appropriate initial value, with the result that the illumination light does not serve as satisfactory white light. Hence, in the illumination device 10 of the present embodiment, there is provided a control system (see Fig. 4) that can return the color shade of the illumination light to the initial state when unsatisfactory color shade of the illumination light is produced.

As shown in Fig. 4, in the control system provided in the illumination device 10 of the present embodiment, an LED driver 12 is connected to a main controller 11, and currents supplied from the LED driver 12 to the light emitting elements (LEDs) 3 are controlled by the main controller 11. The main controller 11 is an example of a "control portion" of the present invention.

The control system is provided with an amplification circuit (AMP) 13 that has the function of amplifying an output value of the photodiode (PD) 5 to convert it from a current signal to a voltage signal, an A-D converter (ADC) 14 that has the function of converting the signal from the amplification circuit (AMP) 13 from analog to digital and the like. The photodiode 5 is connected to the main controller 11 through the amplification circuit 13 and the A-D converter 14. Specifically, the output value of the photodiode 5 is input to the main controller 11 through the amplification circuit 13 and the A-D converter 14. A memory (ROM) 15 is connected to the main controller 11; the initial values of the brightness of the three types of LED light are stored in the memory.

The color shade correction operation of correcting the color shade of the illumination light is controlled by the main controller 11. Specifically, when the mode is switched from a normal mode to a correction mode, the main controller 11 determines the degradation rates of the red LED 3a, the green LED 3b and the blue LED 3c, and currents supplied to the LEDs are adjusted based on the degradation rates. The degradation rates of the red LED 3a, the green LED 3b and the blue LED 3c are determined by comparison with the initial values stored in the memory 15. The control is performed in this way, and thus it is possible to return the brightness ratio of the three types of LED light to the initial state. This results in satisfactory color shade of the illumination light.

In the present embodiment, when the color shade correction operation is performed, an LED that is degraded most significantly among the red LED 3a, the green LED 3b and the blue LED 3c in each of the light emitting elements 3 is identified. Based on the degradation rate of the LED that is degraded most significantly, the light emitting elements 3 are classified into a first group in which the color shade is corrected and a second group in which the color shade is not corrected. The classification is performed by the main controller 11; the classification is performed by determining whether or not the degradation rate of the LED that is degraded most significantly reaches a predetermined value.

Specifically, the light emitting element 3 in which the degradation rate of the LED that is degraded most significantly reaches the predetermined value is not subjected to the color shade correction, and the light emitting element 3 in which the degradation rate of the LED that is degraded most significantly does not reach the predetermined value is subjected to the color shade correction. In the light emitting element 3 in which the degradation rate of the LED that is degraded most significantly does not reach the predetermined value, a current supplied to the LED that is degraded most significantly is fixed, and currents supplied to the other LEDs are adjusted to initial usage values or less, with the result that the brightness ratio of the three types of LED light is returned to the initial state.

The predetermined value that is used to determine whether or not the color shade correction is performed is previously set. Even when the color shade correction is performed on the light emitting element 3 in which the degradation rate of the LED that is degraded most significantly does not reach the predetermined value, the brightness of light emitted by such a light emitting element 3 is prevented from being excessively reduced. On the other hand, when the color shade correction is performed on the light emitting element 3 in which the degradation rate of the LED that is degraded most significantly reaches the predetermined value, the brightness of light emitted by such a light emitting element 3 is excessively reduced. Hence, in the present embodiment, when the degradation rate of the LED that is degraded most significantly reaches the predetermined value, the light emitting element 3 including such an LED is not subjected to the color shade correction.

In the present embodiment, when the color shade correction operation is performed, light is sequentially emitted by the red LED 3a, the green LED 3b and the blue LED 3c on a one-by-one basis. Based on a value that is output from the photodiode 5 at that time, the degradation rates of the red LED 3a, the green LED 3b and the blue LED 3c are determined.

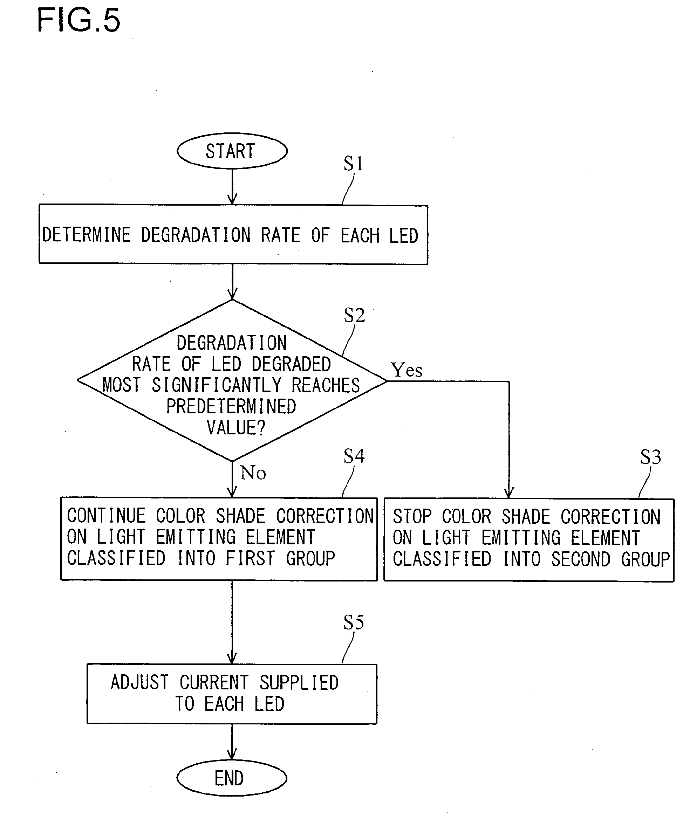

The color shade correction operation of the illumination device 10 of the present embodiment will be described below with reference to Fig. 5.

A user switches the mode from the normal mode to the correction mode, and thus the color shade correction operation of the illumination device 10 of the present embodiment is started.

Then, in step S1, the brightness of the red LED 3a, the green LED 3b and the blue LED 3c in each of the light emitting elements 3 is individually measured, and thus the degradation rate of each LED is determined. Specifically, the red LED 3a, the green LED 3b and the blue LED 3c first emit light sequentially on a one-by-one basis. Here, light emitted from the red LED 3a, the green LED 3b and the blue LED 3c is received by the photodiode 5, and a value corresponding to the brightness of the received LED light is the output value of the photodiode 5.

The output value of the photodiode 5 is output to the main controller 11 through the amplification circuit 13 and the A-D converter 14. Then, the main controller 11 compares the output value (value corresponding to the brightness of LED light at the time of correction) of the photodiode 5 with the initial value (value corresponding to the brightness of LED light at the time of initial use) stored in the memory 15, and the degradation rates of the red LED 3a, the green LED 3b and the blue LED 3c are determined.

Then, in step S2, among the red LED 3a, the green LED 3b and the blue LED 3c in each of the light emitting elements 3, an LED that is degraded most significantly is identified, and whether or not the degradation rate of the LED that is degraded most significantly reaches the predetermined value is determined. This determination is made by the main controller 11; it is considered that, when the color shade correction is performed on the light emitting element 3 in which the degradation rate of the LED that is degraded most significantly reaches the predetermined value, the brightness of emitted light is excessively decreased. On the other hand, it is considered that, even when the color shade correction is performed on the light emitting element 3 in which the degradation rate of the LED that is degraded most significantly does not reach the predetermined value, decreases in brightness of emitted light are reduced to a certain extent. Therefore, the light emitting element 3 in which the degradation rate of the LED that is degraded most significantly reaches the predetermined value is classified into the second group in which the color shade is not corrected whereas the light emitting element 3 in which the degradation rate of the LED that is degraded most significantly does not reach the predetermined value is classified into the first group in which the color shade is corrected.

When the degradation rate of the LED that is degraded most significantly is determined to reach the predetermined value, the process proceeds to step S3 where the color shade correction performed on the light emitting element 3 (light emitting element that is classified into the second group) including such an LED is stopped. On the other hand, when the degradation rate of the LED that is degraded most significantly is determined not to reach the predetermined value, the process proceeds to step S4 where the color shade correction performed on the light emitting element 3 (light emitting element that is classified into the first group) including such an LED is continued.

For example, when the degradation characteristic of a predetermined light emitting element 3 is as shown in Fig. 6, and the predetermined value is assumed to be 50%, the degradation rate of the LED that is degraded most significantly at the time T of color shade correction reaches the predetermined value, with the result that the color shade correction performed on the predetermined light emitting element 3 is stopped. Thereafter, the color shade correction is not performed on the predetermined light emitting element 3. The degradation rates shown in Fig. 6 are assumed to be 100% at the time of initial use. "R", "G" and "B" shown in Fig. 6 represent the degradation rates of the red LED, the green LED and the blue LED, respectively.

Then, in step S5, the currents supplied to the LEDs are adjusted based on the degradation rates of the red LED 3a, the green LED 3b and the blue LED 3c. The adjustment of the supplied currents is controlled by the main controller 11; the currents are supplied by the LED driver 12 to the red LED 3a, the green LED 3b and the blue LED 3c.

When the supplied currents are adjusted, control is performed such that a current supplied to the LED that is degraded most significantly is fixed, and that currents supplied to the other LEDs are adjusted to initial usage values or less. In other words, while the brightness of the LED that is degraded most significantly is fixed, the brightness of the other LEDs is varied. Thus, the brightness ratio of the three types of LED light is returned to the initial state. Consequently, the color shade of the illumination light obtained by mixing the three types of LED light is adjusted to the initial state. The adjustment of the supplied currents is performed individually on the light emitting element (light emitting element that is classified into the first group) 3 in which the color correction is continued.

In the present embodiment, as described above, the main controller 11 is configured such that, when the color shade correction operation is performed, the LED that is degraded most significantly among the red LED 3a, the green LED 3b and the blue LED 3c in each of the light emitting elements 3 is identified, and that, based on the degradation rate of the LED that is degraded most significantly, the light emitting elements 3 are classified into the first group in which the color shade is corrected and the second group in which the color shade is not corrected. Hence, when the current supplied to the LED that is degraded most significantly is fixed, the currents supplied to the other LEDs are adjusted to the initial usage values or less and thus the color shade correction is performed on the light emitting element 3, it is possible to perform control such that, if color shade correction performed on a light emitting element 3 causes the brightness of emitted light to be reduced excessively, the color shade correction is not performed on such a light emitting element 3. In other words, it is possible to prevent the brightness of light emitted by any one of the light emitting elements 3 from being reduced excessively as a result of the color shade correction operation being operated. Consequently, even when the color shade correction operation is performed, it is possible to minimize decreases in brightness of the illumination light.

As described above, in the present embodiment, light is sequentially emitted by the red LED 3a, the green LED 3b and the blue LED 3c on a one-by-one basis, and, based on the value that is output from the photodiode 5 at that time, the degradation rates of the LEDs are determined. Thus, it is possible to easily and accurately determine the degradation rates of the LEDs.

It should be considered that the embodiment disclosed herein is illustrative but not restrictive in all respects. The scope of the present invention is indicated not by the above description of the embodiment but by the scope of claims; furthermore, meanings equivalent to the scope of claims and all modifications within the scope are included.

For example, although the above embodiment deals with the case where the present invention is applied to the illumination device using the tandem method, the present invention is not limited to this configuration. The present invention may be applied to illumination devices that do not use the tandem method.

Although the above embodiment deals with the case where one light receiving element is provided for two light emitting elements, the present invention is not limited to this configuration. One light receiving element may be provided for three or more light emitting elements. Alternatively, one light receiving element may be provided for one light emitting element.

### List of Reference Symbols

- 3: Light emitting element
- 3a: Red LED (red light emitting diode)
- 3b: Green LED (green light emitting diode)
- 3c: Blue LED (blue light emitting diode)
- 5: Photodiode (light receiving element)
- 10: Illumination device
- 11: Main controller (control portion)
- 20: Liquid crystal display panel (member to be illuminated)

## Claims

1. An illumination device that mixes red light, green light and blue light to generate illumination light and that uses the illumination light to illuminate a member to be illuminated, the illumination device comprising:
a plurality of light emitting elements, each including a red light emitting diode that emits red light, a green light emitting diode that emits green light and a blue light emitting diode that emits blue light; and
a control portion that performs a color shade correction operation of correcting a color shade of the illumination light by determining degradation rates of the red light emitting diode, the green light emitting diode and the blue light emitting diode and adjusting, based on the degradation rates, currents supplied to the red light emitting diode, the green light emitting diode and the blue light emitting diode,
wherein the control portion identifies, when the color shade correction operation is performed, a light emitting diode that is degraded most significantly among the red light emitting diode, the green light emitting diode and the blue light emitting diode in each of the plurality of light emitting elements, and classifies, based on a degradation rate of the light emitting diode that is degraded most significantly, the plurality of light emitting elements into a first group in which color shade correction is performed and a second group in which the color shade correction is not performed.

2. The illumination device of claim 1,
wherein, when the color shade correction operation is performed, whether or not the degradation rate of the light emitting diode that is degraded most significantly reaches a predetermined value is determined, and the color shade correction is not performed on any of the light emitting elements in which the degradation rate of the light emitting diode that is degraded most significantly reaches the predetermined value, and the color shade correction is performed on any other of the light emitting elements in which the degradation rate of the light emitting diode that is degraded most significantly does not reach the predetermined value.

3. The illumination device of claim 1 or 2, further comprising:
a light receiving element that receives light emitted from each of the red light emitting diode, the green light emitting diode and the blue light emitting diode and that outputs a value corresponding to a brightness of the received light;
wherein, when the color shade correction operation is performed, the degradation rates of the red light emitting diode, the green light emitting diode and the blue light emitting diode are determined based on the output value of the light receiving element.

4. The illumination device of any one of claims 1 to 3,
wherein, when the color shade correction operation is performed, light is sequentially emitted by the red light emitting diode, the green light emitting diode and the blue light emitting diode on a one-by-one basis such that the degradation rates of the red light emitting diode, the green light emitting diode and the blue light emitting diode are determined.

5. The illumination device of any one of claims 1 to 4,
wherein, when the color shade correction operation is performed, correction is performed on any of the light emitting elements classified into the first group such that a current supplied to the light emitting diode which is degraded most significantly is fixed and that currents supplied to the other light emitting elements are adjusted to initial usage values or less.

6. A liquid crystal display device comprising:
the illumination device of any one of claims 1 to 5; and
a liquid crystal display panel illuminated by the illumination device.
